(19) Europäisches Patentamt
European Patent Office
Office européen des brevets

(11) EP 2 532 603 A1

(12) **EUROPEAN PATENT APPLICATION**
published in accordance with Art. 153(4) EPC

(43) Date of publication:
**12.12.2012 Bulletin 2012/50**

(21) Application number: **11739682.0**

(22) Date of filing: **28.01.2011**

(51) Int Cl.:
***B65D 65/40*** *(2006.01)* ***A22C 13/00*** *(2006.01)*
***B65D 33/00*** *(2006.01)* ***B65D 33/22*** *(2006.01)*
***B65D 85/50*** *(2006.01)*

(86) International application number:
**PCT/JP2011/051743**

(87) International publication number:
**WO 2011/096333 (11.08.2011 Gazette 2011/32)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **05.02.2010 JP 2010024499**

(71) Applicant: **Idemitsu Unitech Co., Ltd.**
**Tokyo 108-0014 (JP)**

(72) Inventor: **TAKASHIGE Masao**
**Tokyo 104-0033 (JP)**

(74) Representative: **Skone James, Robert Edmund**
**Gill Jennings & Every LLP**
**The Broadgate Tower**
**20 Primrose Street**
**London EC2A 2ES (GB)**

# (54) CASING MATERIAL FOR PILLOW PACKAGING AND PILLOW PACKAGE

(57) In a casing material (1), an adhesion layer (12) containing CPP as a main component is laminated on one surface of a biaxially-oriented nylon film (11) and a protection layer (13) is laminated on the other surface of the biaxially-oriented nylon film (11), the protection layer (13) being formed of a specific resin (e.g., PVDC). Accordingly, a seal strength of the adhesion layer (12) can be increased and strength such as impact resistance can be improved. Consequently, by forming adhesion portions of the pillow package using the adhesion layer (12), an easily openable and highly strong pillow package can be obtained without using a metal clip. Moreover, since the protection layer (13) is formed of the specific resin such as the PVDC resin, heat resistance and strength are excellent. Accordingly, the biaxially-oriented nylon film (11) is protectable in a retort process by high-temperature water, so that breakage of the package and the like is preventable.

FIG.1

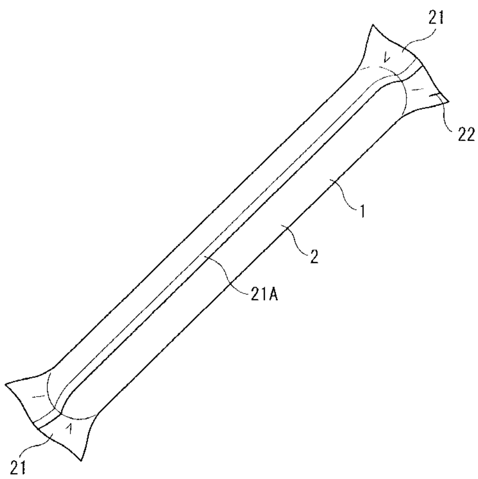


EP 2 532 603 A1

## Description

TECHNICAL FIELD

The present invention relates to a casing material for pillow packaging and a pillow package.

BACKGROUND ART

There has conventionally been known an easily tearable casing material for packaging which is used for packaging foods, medicines, industrial materials and the like (see, for instance, Patent Literature 1). Moreover, there has been known a casing material for pillow packaging for tightly packaging meat, fish meat and the like in a form of a sausage and the like (see, for instance, Patent Literatures 2 and 3).

Patent Literature 1 discloses a casing material for packaging in which a sealant film is laminated on one surface of a biaxially-oriented nylon film. Patent Literature 1 also discloses another arrangement in which a base film is further laminated on the other surface of the biaxially-oriented nylon film.
Patent Literatures 2 and 3 disclose a casing material for pillow packaging in which a polyolefin layer is laminated on each of surfaces of a nylon film, or a heat fusion layer is laminated on either surface of the nylon film.

CITATION LIST

PATENT LITERATURE(S)

Patent Literature 1 JP-A-5-200958
Patent Literature 2 JP-A-2001-30445
Patent Literature 3 JP-A-2000-203680

SUMMARY OF THE INVENTION

PROBLEMS TO BE SOLVED BY THE INVENTION

However, Patent Literature 1 fails to disclose that the casing material for packaging is applied to a pillow package for tightly packaging fish meat and the like.
In the pillow package to which the casing material for pillow packaging disclosed in Patent Literature 2 is applied, both ends of the pillow package are sealed by metal clips, so that it is difficult to open the pillow package for eating. Moreover, since the metal clips are used, it is impossible to detect a metal foreign object in a manufacturing process and it is also difficult to remove the metal clips for disposal. Further, sealing by the metal clips is insufficient in sealability.
In the pillow package to which the casing material for pillow packaging disclosed in Patent Literature 3 is applied, the nylon film is provided on an outer surface of the pillow package. Accordingly, when the pillow package is subjected to a retort process with high-temperature water, the nylon film may be hardened, so that the pillow package may become fragile to decrease its strength. During filling operation and transportation operation, pinholes may generate on the pillow package.

An object of the invention is to provide a casing material for pillow packaging and a pillow package that are easily openable and easily tearable while having a high strength and heat resistance.

MEANS FOR SOLVING THE PROBLEMS

According to an aspect of the invention, a casing material for pillow package includes: a biaxially-oriented nylon film; and an adhesion layer that is laminated on the biaxially-oriented nylon film and includes a cast polypropylene resin as a main component, in which a protection layer is laminated on the biaxially-oriented nylon film at a side opposite to the adhesion layer, and the protection layer is formed of at least one of a polyvinylidene chloride resin, an acrylic resin, a urethane resin, a polyethylene terephthalate resin and a nitrocellulose amide resin by solvent coating.
With this arrangement, the biaxially-oriented nylon film preferably includes Nylon 6 and metaxylylene adipamide at a mass ratio of Nylon 6 to metaxylylene adipamide ((Nylon 6)/(metaxylylene adipamide)) being from 1.5 to 6, and the biaxially-oriented nylon film is preferably formed by being oriented at a draw ratio of 2.8 or more in both an MD direction (a movement direction of the film) and a TD direction (a width direction of the film).
Further, the protection layer preferably has a thickness of 0.5 $\mu$m to 5 $\mu$m.

According to another aspect of the invention, a pillow package formed of the casing material for pillow package according to the above aspect of the invention includes: an adhesion portion formed by overlapping the adhesion layer to itself; and a containing space inside the pillow package, in which the protection layer is provided at a side of the biaxially-oriented nylon film opposite to the containing space.
With this arrangement, a notch is preferably formed on the adhesion portion.

## ADVANTAGE(S) OF THE INVENTION

According to the invention, since the adhesion layer formed of a specific resin is provided to form the adhesion portions, an easily openable and highly strong pillow package can be provided without using a metal clip.
Moreover, according to the invention, since the biaxially-oriented nylon film is formed with the protection layer formed of the specific resin such as the PVDC resin by solvent coating, heat resistance and strength are excellent. Accordingly, in a retort process by high-temperature water, since the biaxially-oriented nylon film is protected, breakage and the like of the package is preventable. In addition, the biaxially-oriented nylon film is also easily tearable. Furthermore, according to the invention, it can be suppressed that pinholes generate in filling operation of fish meat and the like.

## BRIEF DESCRIPTION OF DRAWINGS

Fig. 1 is a perspective view showing a pillow package according to an exemplary embodiment of the invention.
Fig. 2 is a cross-sectional view showing a casing material for pillow packaging according to the exemplary embodiment of the invention.
Fig. 3 illustrates a drop plate impact test for evaluating pillow packages of Examples and Comparatives of the invention.
Fig. 4 illustrates a static pressure retention test for evaluating the pillow packages of Examples and Comparatives of the invention.
Fig. 5 illustrates a drop test for evaluating the pillow packages of Examples and Comparatives of the invention.
Fig. 6 illustrates a linear cuttability test for evaluating a biaxially-oriented nylon film used in the invention.

## DESCRIPTION OF EMBODIMENT(S)

An exemplary embodiment of the invention will be described below with reference to the attached drawings. Fig. 1 is a perspective view showing a pillow package according to an exemplary embodiment of the invention. Fig. 2 is a cross-sectional view showing a casing material for pillow packaging according to the exemplary embodiment of the invention.

### Casing Material for Pillow Packaging

A casing material for pillow packaging 1 according to the exemplary embodiment (hereinafter, referred to as a "casing material 1") is a laminate film used for a pillow package 2 shown in Fig. 1. As shown in Fig. 2, the casing material 1 includes: a biaxially-oriented nylon film 11; an adhesion layer 12 laminated on a surface of the biaxially-oriented nylon film 11; and a protection layer 13 laminated on the biaxially-oriented nylon film 11 at a side opposite to the adhesion layer 12.

The biaxially-oriented nylon film 11, which is disposed between the protection layer 13 and the adhesion layer 12, is an easily tearable film that shrinks by a heat process. As the biaxially-oriented nylon film 11, a shrinkable biaxially-oriented nylon film is preferably used. By using the shrinkable biaxially-oriented nylon film as the biaxially-oriented nylon film 11, tension of the casing material 1 is increased to improve tight contact between the casing material 1 and contents (e.g., fish meat). Moreover, by using the shrinkable biaxially-oriented nylon film as the biaxially-oriented nylon film 11, strength of the biaxially-oriented nylon film 11 is increased to improve pinhole resistance.
The biaxially-oriented nylon film 11 is a blend product made of a virgin material and a product with heat history (starting materials).
The virgin material contains Nylon 6 (hereinafter, referred to as "Ny6") and metaxylylene adipamide (hereinafter, referred to as "MXD6") at a mass rate of Ny6 to MXD6 ((Ny6)/(MXD6)) being from 1.5 to 6.
On the other hand, the thermoformed product is provided by melt-mixing Ny6 and MXD6. A melting point of MXD6 in the thermoformed product is in a range of 234 degrees C to 238 degrees C. A content of the thermoformed product is in a range of 5 mass% to 40 mass% of a total amount of the starting materials.
Here, a formula (1) representing Ny6 is shown below.

[Formula 1] $H-[NH-(CH_2)_5-CO]_n-OH$ **(1)**

A formula (2) representing MXD6 is shown below.

[Formula 2]

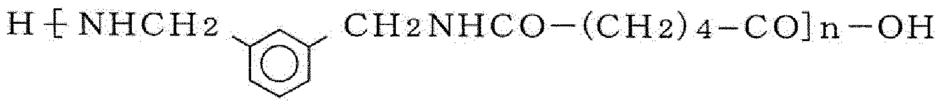

···(2)

The adhesion layer 12 is not limited to a particular resin as long as the adhesion layer 12 contains a cast polypropylene (CPP) resin as a main component. The adhesion layer 12 may be provided by mixing linear low density polyethylene (LLDPE), polypropylene obtained by a metallocene catalyst (metallocene PP) and the like with CPP. Particularly, in terms of heat resistance, it is preferable to use the adhesion layer in which CPP (the main component) and metallocene PP are mixed.

When the mixture of CPP (the main component) and metallocene PP is used as the adhesion layer 12, an anti-pressure strength and a plate drop strength of the adhesion layer 12 can be improved more than those of an adhesion layer 12 formed only by CPP.

If the adhesion layer 12 contains an oriented polypropylene (OPP) resin as the main component, seal strength and impact resistance of the adhesion layer 12 in the pillow package 2 are decreased.

The protection layer 13 is formed of at least one of a polyvinylidene chloride (PVDC) resin, an acrylic resin, a urethane resin, a polyethylene terephthalate (PET) resin and a nitrocellulose amide resin by solvent coating. The protection layer 13 is particularly preferably formed of a nitrocellulose amide resin in consideration of adhesion to the biaxially-oriented nylon film 11 and productivity and product costs.

If the protection layer 13 is formed by emulsion coating, since a suspension is used, the protection layer 13 may be easily whitened to deteriorate appearance when the temperature exceeds 100 degrees C in the retort process.

A thickness of the protection layer 13 is preferably in a range of 0.5 μm to 5 μm. When the thickness of the protection layer 13 is less than 0.5 μm, since the protection layer is unevenly coated, strength and heat resistance of the protection layer 13 may be decreased to cause the protection layer 13 to be broken or hardened by the retort process. On the other hand, when the thickness of the protection layer 13 exceeds 5 μm, shrinkability of the biaxially-oriented nylon film 11 may be impaired, so that fish meat and the like may not be packaged. Moreover, in order to form the protection layer 13 having the thickness exceeding 5 μm, coating needs to be repeated twice (double coating), which unfavorably increases costs.

For instance, for packaging fish meat, a thickness of the biaxially-oriented nylon film 11 is preferably in a range of 12 μm to 25 μm and a thickness of the adhesion layer 12 is preferably in a range of 25 μm to 60 μm.

Note that easy tearability of the casing material is decreased when the protection layer 13 is disposed between the biaxially-oriented nylon film 11 and the adhesion layer 12.

Production Method of Casing Material for Pillow Packaging

Next, a production method of the biaxially-oriented nylon film 11 will be described.

The biaxially-oriented nylon film 11 is producible using tubular biaxially-orientation equipment. For instance, a mixture provided by dry-blending Ny6 pellets, MXD6 pellets and thermoformed products is melt-extruded and then cooled. The obtained raw film is biaxially oriented at a draw ratio of 2.8 or more in the MD direction and the TD direction. The oriented raw film is heat-processed at the temperature of 150 degrees C to 215 degrees C. Thus, the biaxially-oriented nylon film 11 is producible. Note that the biaxial orientation may be performed simultaneously or sequentially. Alternatively, tenter-type biaxially-orientation equipment may be used.

Subsequently, the protection layer 13 is formed on the biaxially-oriented nylon film 11 by solvent coating. Specifically, a PVDC resin and the like forming the protection layer 13 is dissolved in a solvent such as THF (tetrahydrofuran) to provide a solution. The solution is coated on the biaxially-oriented nylon film 11. The solvent is removed by heating to form the protection layer 13.

Next, the adhesion layer 12 is laminated on the biaxially-oriented nylon film 11. A lamination method may be exemplified by extrusion laminate, hot-melt laminate, dry laminate and wet laminate.

Consequently, the casing material 1 is producible.

Pillow Package

As shown in Fig. 1, the pillow package 2 is formed of the casing material 1 and tightly packages foods such as fish meat. The pillow package 2 includes: elongated adhesion portions 21 at both longitudinal ends, and a backlining portion 21A that is formed by fin-sealing in a manner to extend from one of the adhesion portions 21 to the other thereof. On at least one of the adhesion portions 21, a notch 22 is preferably formed in the MD direction (a movement direction of the casing material 1).
Moreover, the pillow package 2 includes a containing space for containing foods (e.g., fish meat) thereinside.
In the casing material 1 forming the pillow package 2, the adhesion layer 12 is provided to the biaxially-oriented nylon film 11 facing the containing space and the protection layer 13 is provided to the biaxially-oriented nylon film 11 at a side opposite to the containing space (i.e., an outer surface).
Note that a barrier layer formed of an ethylene vinyl alcohol resin or the like further laminated on an outer surface of the protection layer 13 is not preferable since easy tearability may be impaired.

Production Method of Pillow Package

Next, a production method of the pillow package 2 will be described.
The pillow package 2 as shown in Fig. 1 is producible using a known pillow packaging machine. Firstly, the elongated backlining portion 21A is formed in the longitudinal direction (i.e., the movement direction of the casing material 1) with the adhesion layer 12 of the casing material 1 faced inside. Ground fish meat is continuously supplied and fed in the casing material 1.
Next, the adhesion portions 21 are formed at both the longitudinal ends of the casing material 1 to obtain the pillow package 2. Here, the adhesion portions 21 are formed by thermally adhering the adhesion layer 12 to itself while the adhesion layer 12 is overlapped on itself (i.e., by fin-sealing). Subsequently, the notch 22 is formed on the adhesion portions 21 in the movement direction of the casing material 1.
The obtained pillow package 2 is treated with a retort process. The retort process is performed, for instance, from 4 to 40 minutes at 120 degrees C. By this process, the pillow package 2 is shrunk, thereby tightly packaging the contents such as fish meat.

Advantages of Embodiment(s)

In the casing material 1 according to the exemplary embodiment, the adhesion layer 12 containing CPP as the main component is laminated on one surface of the biaxially-oriented nylon film 11 and the protection layer 13 is laminated on the other surface of the biaxially-oriented nylon film 11, the protection layer 13 being formed of the specific resin (e.g., PVDC).
Since the adhesion layer 12 contains CPP as the main component, a seal strength can be increased and strength such as impact resistance can be improved as compared with a case where the adhesion layer 12 contains an oriented polypropylene (OPP) resin as the main component. Thus, by forming the adhesion portions 21 of the pillow package 2 using the adhesion layer 12, the easily openable and highly strong pillow package 2 can be obtained without using metal clips.
Further, since no metal clip is necessary in the pillow package 2 formed of the casing material 1, complete sealing is possible and a metal foreign object is detectable to facilitate removal for disposal.
Furthermore, since the protection layer 13 is formed of the specific resin such as the PVDC resin, heat resistance and strength are excellent. Accordingly, in the retort process by high-temperature water, the biaxially-oriented nylon film 11 is protectable, so that breakage of the package and the like is preventable. Moreover, since the protection layer 13 is provided, it is suppressed that pinholes generate in filling operation.
Since the protection layer 13 is formed of the PVDC resin and the like by solvent coating, even when the temperature exceeds 100 degrees C in the retort process, whitening of the protection layer 13 is suppressible and deterioration of appearance is preventable.
Since the biaxially-oriented nylon film 11 is excellent in easy tearability, the casing material 1 can be formed to be easily tearable. Accordingly, the casing material 1 is suitable for packaging foods.
Since the biaxially-oriented nylon film 11 is formed of Ny6 and MXD6 at a specific mass ratio, the pillow package 2 is excellent in linear cuttability and easily openable.
Further, since the biaxially-oriented nylon film 11 is formed at the draw ratio of 2.8 or more by a tubular method, strength of the biaxially-oriented nylon film 11 can be improved more than strength of the biaxially-oriented nylon film 11 formed by a tenter method.
Since the adhesion layer 12 is formed in a specific thickness, heat shrinkability, heat resistance and strength can be further improved.

In the pillow package 2 according to the exemplary embodiment, since each of the adhesion portions 21 is formed by layering the adhesion layer 12 containing CPP (the main component) to itself, a sealing member such as a metal clip is unnecessary. Accordingly, the pillow package 2 is easily openable.
Since the notch 22 is formed on the adhesion portion(s) 21 of the pillow package 2, the pillow package 2 is linearly and easily tearable from the notch 22 for eating and the contents such as fish meat can be easily taken out. Since the notch 22 is formed in the MD direction of the biaxially-oriented nylon film 11, linear cuttability is further improvable.

Modification

It should be understood that the scope of the invention is not limited to the above-described exemplary embodiment(s) but includes modifications and improvements as long as the modifications and improvements are compatible with the invention. In addition, specific arrangements and profiles when implementing the invention may be altered as long as an object and advantages of the invention can be achieved.
Although the casing material for pillow package is exemplarily provided by a laminate film, the casing material for pillow package may be provided by a laminate sheet having a predetermined thickness.
Although the casing material for pillow package is configured to have three layers of the biaxially-oriented nylon film, the adhesion layer and the protection layer, the casing material for pillow package may be configured to have four or more layers. For instance, outside of the protection layer (i.e., at a side opposite to the biaxially-oriented nylon film), a slip agent, an antistatic agent or the like may be further coated. When the slip agent such as erucamide is coated on the protection layer, filling before the retort process is easily performed. Alternatively, the slip agent may be blended in the protection layer.
Although the protection layer is formed by the solvent coating, the protection layer may be formed by an emulsion coating. In the emulsion coating, for instance, suspension of the resin for forming the protection layer is coated on the biaxially-oriented nylon film to form the protection layer.
Although the pillow package tightly packages fish meat and the like, the pillow package may package fish meat and the like with a predetermined space instead of tightly packaging.
Moreover, although the pillow package is used for food package for packaging fish meat and the like, the pillow package may be used for packaging medicines, industrial materials, cosmetics and the like.

Examples

The invention will be described more specifically with reference to Examples and Comparisons. However, the scope of the invention is not limited to the Examples.
Fig. 3 illustrates a drop plate impact test for evaluating pillow packages of Examples and Comparatives in the invention. Fig. 4 illustrates a static pressure retention test for evaluating pillow packages of Examples and Comparatives in the invention. Fig. 5 illustrates a drop test for evaluating pillow packages of Examples and Comparatives in the invention. Fig. 6 illustrates a linear cuttability test for evaluating a biaxially-oriented nylon film used in the invention.

Examples 1 to 11 and Comparatives 1 to 5

A casing material for pillow packaging and a pillow package were manufactured as follows in each of Examples 1 to 11 and Comparatives 1 to 5.

Example 1

As shown in Table 1, UNIASLON TB (product name, manufactured by Idemitsu Unitech Co., Ltd.) was used as a biaxially-oriented nylon film. This biaxially-oriented nylon film, which was a blend product of Ny6 and MXD6 (at a blend ratio of ((Ny6)/(MXD6))=2), was biaxially-oriented by a tubular method to have a thickness of 15 μm. A shrinkage factor at 120 degrees C of the biaxially-oriented nylon film was 7.0% in the MD direction and 5.5% in the TD direction.
A PVDC resin was coated as the protection layer on one surface of the biaxially-oriented nylon film at a thickness of 3 μm by the solvent coating. On the other hand, on the other surface of the biaxially-oriented nylon film at a side opposite to the protection layer, an adhesion layer (a CPP sealant for retort process) having a thickness of 40 μm was laminated to provide a casing material for pillow package.
Next, using a pillow packaging machine, 20 g of contents (sausage) was fed and sealed in the casing material for pillow packaging, and a pillow package was produced so that the protection layer was an outer surface (an outer laminate). Subsequently, the pillow package was sterilized at 120 degrees C for 20 minutes in a retort furnace.

Example 2

A casing material for pillow packaging and a pillow package were manufactured in the same manner as those in Example 1 except that the thickness of the protection layer was 1 μm.

Example 3

A casing material for pillow packaging and a pillow package were manufactured in the same manner as those in Example 1 except that an acrylic resin was used as the protection layer in place of the PVDC resin.

Example 4

A casing material for pillow packaging and a pillow package were manufactured in the same manner as those in Example 1 except that a urethane resin was used as the protection layer in place of the PVDC resin.

Example 5

A casing material for pillow packaging and a pillow package were manufactured in the same manner as those in Example 1 except that a PET resin was used as the protection layer in place of the PVDC resin.

Example 6

A casing material for pillow packaging and a pillow package were manufactured in the same manner as those in Example 1 except that NC (product name, manufactured by UNITIKA LTD.) which was biaxially-oriented by the tenter method was used as the biaxially-oriented nylon film. A shrinkage factor at 120 degrees C of this biaxially-oriented nylon film was 6.0% in the MD direction and 4.0% in the TD direction.

Example 7

A casing material for pillow packaging and a pillow package were manufactured in the same manner as those in Example 1 except that the thickness of the protection layer was 1 μm and a nitrocellulose amide resin was used as the protection layer in place of the PVDC resin.

Example 8

A casing material for pillow packaging and a pillow package were manufactured in the same manner as those in Example 1 except that the thickness of the protection layer was 0.6 μm and a nitrocellulose amide resin was used as the protection layer in place of the PVDC resin.

Example 9

A casing material for pillow packaging and a pillow package were manufactured in the same manner as those in Example 1 except that the thickness of the protection layer was 0.4 μm and a nitrocellulose amide resin was used as the protection layer in place of the PVDC resin.

Example 10

A casing material for pillow packaging and a pillow package were manufactured in the same manner as those in Example 1 except that a shrink-type UNIASLON TB (manufactured by Idemitsu Unitech Co., Ltd.) of a shrinkable biaxially-oriented nylon film was used as the biaxially-oriented nylon film and the thickness of the protection layer was 2 μm. A shrinkage factor at 120 degrees C of this biaxially-oriented nylon film was 19.0% in the MD direction and 16.0% in the TD direction.

Example 11

A casing material for pillow packaging and a pillow package were manufactured in the same manner as those in Example 1 except that the thickness of the protection layer was 2 μm and a mixture of CPP (the main component) and metallocene PP (MPP) was used as the adhesion layer.

Comparative 1

A casing material for pillow packaging and a pillow package were manufactured in the same manner as those in Example 1 except that the protection layer was laminated between the biaxially-oriented nylon film and the adhesion layer (i.e., an inner laminate).

Comparative 2

A casing material for pillow packaging and a pillow package were manufactured in the same manner as those in Example 1 except that no protection layer was laminated.

Comparative 3

A casing material for pillow packaging and a pillow package were manufactured in the same manner as those in Example 1 except that NC was used as the biaxially-oriented nylon film and no protection layer was laminated.

Comparative 4

A casing material for pillow packaging and a pillow package were manufactured in the same manner as those in Example 1 except that the protection layer was formed of the PVDC resin by emulsion coating.

Comparative 5

A casing material for pillow packaging and a pillow package were manufactured in the same manner as those in Example 1 except that the thickness of the protection layer was 1 $\mu$m and nitrocellulose was used as the protection layer in place of the PVDC resin.

Evaluation Method

The casing materials for pillow packaging and the pillow packages obtained in Examples 1 to 11 and Comparatives 1 to 5 were tested by the following drop plate impact test, pressure resistance test, drop test and easy tearability test and were evaluated based on the following evaluation scales for the respective tests.

Drop Plate Impact Test

The drop plate impact test was performed using a drop plate impact tester as shown in Fig. 3. The drop plate impact tester includes a flat stage plate 9A1 on which a pillow package 9A is mounted and a flat drop plate 9A3 that is connected to the stage plate 9A1 via a connecting portion 9A2.
The drop plate 9A3 is a 1-kg plastic plate with a 20-cm height (a length in a vertical direction of Fig. 3). In the drop plate impact test, the drop plate 9A3 was repeatedly hit against the stage plate 9A1 while the pillow package 9A was interposed between the drop plate 9A3 and the stage plate 9A1. Subsequently, conditions of the pillow package 9A were evaluated based on the evaluation scales.

Evaluation Scales

A: no breakage of the pillow package even after being hit 50 times or more
B: no breakage of the pillow package even after being hit 30 times or more
C: no breakage of the pillow package even after being hit 11 to 29 times
D: no breakage of the pillow package even after being hit 3 to 10 times
E: breakage of the pillow package after being hit twice or less

Pressure Resistance Test

The pressure resistance test was performed using a pressure resistance tester as shown in Fig. 4. The pressure resistance tester includes a flat stage plate 9B1 on which a pillow package 9B is mounted and a flat pressing plate 9B2 that presses the pillow package 9B while the pillow package 9B was interposed between the stage plate 9B1 and the

pressing plate 9B2.
In the pressure resistance test, a 10-kg load was applied on the pillow package 9B by the pressing plate 9B2 for five minutes and conditions of the pillow package 9B were evaluated based on the following evaluation scales.

Evaluation Scales

A: no breakage of the pillow package even with the load applied for 20 minutes or more
B: no breakage of the pillow package even with the load applied for ten minutes or more
C: no breakage of the pillow package even with the load applied for five minutes to less than ten minutes
D: no breakage of the pillow package even with the load applied for one minute to less than five minutes
E: breakage of the pillow package with the load applied for less than one minute

Drop Test

In the drop test, a pillow package 9C was repeatedly dropped from a 1-m height to an iron plate 9C1 in a manner to be orthogonal to the iron plate 9C1 and conditions of the pillow package 9C were evaluated based on the following evaluation scales.

Evaluation Scales

A: no breakage of the pillow package even after dropped 100 times or more
B: no breakage of the pillow package even after dropped 50 times or more
C: no breakage of the pillow package even after dropped from 10 to 49 times
D: no breakage of the pillow package even after dropped from three to nine times
E: breakage of the pillow package after dropped twice or less

Easy Tearability Test

A notch was formed on the adhesion portion. The casing material for the pillow package was torn away from the notch and openability was evaluated based on the following evaluation scales.

Evaluation Scales

A: openable with a cutting extending for 7 cm before being torn off
B: openable with a cutting extending for 5 cm before being torn off
A: openable with a cutting extending for 3 cm before being torn off
A: openable with a cutting extending for 1 cm before being torn off
E: no cutting of the casing material for pillow package

[Table 1]

| | biaxially-oriented nylon film | | protection layer | | | adhesion layer | drop plate impact test | pressure resistance test | drop test | easy tearability |
|---|---|---|---|---|---|---|---|---|---|---|
| | resin | shrinkage factor | resin | position | thickness (μm) | resin | | | | |
| Example 1 | TB | 7.0/5.5 | PVDC | outer laminate | 3 | CPP | B | B | B | B |
| Example 2 | TB | 7.0/5.5 | PVDC | outer laminate | 1 | CPP | B | B | B | B |
| Example 3 | TB | 7.0/5.5 | acryl | outer laminate | 3 | CPP | B | B | B | B |
| Example 4 | TB | 7.0/5.5 | urethane | outer laminate | 3 | CPP | B | B | B | B |
| Example 5 | TB | 7.0/5.5 | PET | outer laminate | 3 | CPP | B | B | B | B |
| Example 6 | NC | 6.0/4.0 | PVDC | outer laminate | 3 | CPP | C | C | C | C |
| Example 7 | TB | 7.0/5.5 | nitrocellulose amide | outer laminate | 1 | CPP | B | B | B | B |
| Example 8 | TB | 7.0/5.5 | nitrocellulose amide | outer laminate | 0.6 | CPP | B | B | B | B |
| Example 9 | TB | 7.0/5.5 | PVDC | outer laminate | 0.4 | CPP | C | C | C | B |
| Example 10 | shrinkable TB | 19.0/16.0 | PVDC | outer laminate | 2 | CPP | A | A | A | A |
| Example 11 | TB | 7.0/5.5 | PVDC | outer laminate | 2 | CPP+MPP | A | A | A | A |
| Comparative 1 | TB | 7.0/5.5 | PVDC | inner laminate | 3 | CPP | D | D | D | E |
| Comparative 2 | TB | 7.0/5.5 | — | — | — | CPP | D | D | D | C |
| Comparative 3 | NC | 6.0/4.0 | — | — | — | CPP | E | E | E | D |

(continued)

| | biaxially-oriented nylon film | | protection layer | | | adhesion layer | drop plate impact test | pressure resistance test | drop test | easy tearability |
|---|---|---|---|---|---|---|---|---|---|---|
| | resin | shrinkage factor | resin | position | thickness (μm) | resin | | | | |
| Comparative 4 | TB | 7.0/5.5 | PVDC emulsion | outer laminate | 3 | CPP | D | D | D | C |
| Comparative 5 | TB | 7.0/5.5 | nitrocellulose | outer laminate | 1 | CPP | D | D | D | C |

Results

In comparision between Example 1 to 11 and comparative 1 to 5, the protection layer of the pillow package in each of Examples 1 to 11 is provides at the outer side of the pillow package relative to the biaxially-oriented nylon film, the protection layer being formed of the specific resin with the thickness in the specific range. Accordingly, even after the retort process by high-temperature water, the pillow package was not broken and exhibited excellent strength and heat resistance and a favorable easy-tearability.
In comparison between Examples 1 to 5 and Example 6, the biaxially-oriented nylon film manufactured by the tubular method exhibited strength and easy tearability superior to those of the biaxially-oriented nylon film manufactured by the tenter method.
In comparison between Examples 1 to 8 and Example 10, as the biaxially-oriented nylon film, the pillow package using a shrinkable TB exhibited strength and easy tearability superior to those of the pillow package using TB or NC.
In comparison between Examples 1 to 8 and Example 11, as the adhesion layer, the mixture of CPP (the main component) and MPP exhibited anti-pressure strength and plate drop strength superior to those of CPP alone.
In comparison between Examples 7 to 8 and Example 9, when the thickness of the protection layer was less than 0.5 $\mu$m, a sufficient strength was not obtained although easy tearability was unchanged.
On the other hand, in Comparative 1, since the protection layer is provided at an inner side of the pillow package relative to the biaxially-oriented nylon film, the strength and easy tearability of the pillow package were low.
In Comparatives 2 and 3, since no protection layer was formed, the strength of the pillow package was particularly low.
In Comparative 4, since the protection layer was formed by emulsion coating, the strength of the pillow package was low and the protection layer was whitened to deteriorate appearance of the pillow package.
In Comparative 5, since nitrocellulose was used as the protection layer, the protection layer was peeled off the biaxially-oriented nylon film.
Next, the biaxially-oriented nylon films of Examples 12 to 19 used in the invention were manufactured and evaluated in terms of tearing strength, impact strength, easy tearability and linear cuttability.

Example 12

After a mixture of Ny6 of 80 parts by mass and MXD6 of 20 parts by mass was melt-mixed at 270 degrees C in an extruder, the melted mixture was extruded from a dice having a 90-mm diameter into a film in a cylindrical form. Subsequently, the film was rapidly cooled with water to manufacture a raw film.
The used Ny6 was Nylon 6 manufactured by UBE INDUSTRIES, LTD. (UBE Nylon 1023FD (product name), relative viscosity $\eta_r$=3.6). The used MXD6 was metaxylylene adipamide manufactured by MITSUBISHI GAS CHEMICAL COMPANY, INC. (MX Nylon 6007 (product name), relative viscosity $\eta_r$=2.7).
Next, this raw material was biaxially oriented in the MD direction and the TD direction by the tubular method. A draw ratio in this case was 3.0 in both the MD direction and the TD direction. Next, the biaxially-oriented nylon film was put into a tenter-type heat-treating furnace and was heat-set at 210 degrees C to obtain a biaxially-oriented nylon film of Example 12.

Tearing Strength Test and Impact Strength Test

Next, tearing strength and impact strength (film impact) of the obtained oriented-film were measured and the obtained oriented-film was evaluated in terms of easy tearability and linear cuttability. Results are shown in Table 2. The tearing strength was obtained by measuring Elmendorfs tearing strength (kg/cm) of the film in a drawing direction according to JIS-Z1702.
The impact strength was measured using a film impact tester manufactured by TOYO SEIKI SEISAKU-SHO, LTD., by which a fixed ring-shaped film was hit by a semicircular pendulum (1/2 inch diameter, weight of 30kg-cm) and impact strength required for punching the film was measured. The impact strength of 4500 kg·cm/cm or more was evaluated as "B." If the impact strength becomes lower than 4500 kg·cm/cm, performance of the biaxially-oriented nylon film is also lowered and application thereof as the casing material for pillow package becomes less feasible.

Easy-Tearability Test

The easy tearability was evaluated using a value of E representing the Elmendorfs tearing strength, in which $E \leqq 7$kg/cm was defined as "B." When the value of E is 9 kg/cm or more, easy tearability is significantly decreased, and particularly, linear cuttability is rapidly declined.

Linear Cuttability Test

The linear cuttability was evaluated as follows. Specifically, as shown in Fig. 6, a cut line 9D1 was drawn on a 20-cm wide biaxially-oriented nylon film 9D at a predetermined interval $W_s$ (e.g., 2-cm interval) and the biaxially-oriented nylon film 9D was torn along the cut line 9D1. Subsequently, a width $W_e$ of an end 9D3 of a film piece 9D2 was measured. A deviation $\alpha$ between the width $W_e$ and the interval $W_s$ was calculated as follows.

$$\alpha=[(W_s-W_e)/W_s]\times 100$$

Ten film pieces 9D2 were measured and evaluated based on the following scales in terms of $\alpha$ (%) of an average value of the measurements. Note that when $\alpha$ (%) exceeds $\pm$30%, it is difficult to linearly cut the film.

Evaluation Scales

A: $\alpha$ (%) of less than $\pm$10% (Linear cuttability is extremely favorable.)
B: $\pm 10\% \leq \alpha \leq \pm 30\%$ (Linear cuttability is favorable.)

In the total evaluation of Table 2, A represents that linear cuttability is extremely favorable and B represents that linear cuttability is favorable.

Examples 13 to 19

Biaxially-oriented films in Examples 13 to 19 were obtained in the same production process as in Example 12 except that the mixing ratio and the draw ratio of Ny6 and MXD6 in Example 12 were replaced by those shown in Table 2. As for the films of the respective Examples, various properties were measured and evaluated in the same manner as in Example 12. Results are shown in Table 2.

[Table 2]

| | material composition | | draw ratio | | tearing strength (kg/cm) | | easy tearability | linear cuttability | impact strength (kg·cm/cm) | total evaluation |
|---|---|---|---|---|---|---|---|---|---|---|
| | Ny6 | MXD6 | MD | TD | MD | TD | | | | |
| Example 12 | 80 | 20 | 3.0 | 3.0 | 6.8 | 6.8 | B | B | 8000 B | B |
| Example 13 | 70 | 30 | 3.0 | 3.0 | 6.5 | 6.5 | B | B | 7000 B | B |
| Example 14 | 60 | 40 | 3.0 | 3.0 | 6.0 | 6.0 | B | A | 6000 B | A |
| Example 15 | 60 | 40 | 3.5 | 3.0 | 5.0 | 5.5 | B | A | 7000 B | A |
| Example 16 | 60 | 40 | 4.0 | 3.0 | 3.8 | 4.5 | B | A | 7500 B | A |
| Example 17 | 60 | 40 | 3.5 | 3.0 | 4.5 | 4.5 | B | A | 7500 B | A |
| Example 18 | 60 | 40 | 2.8 | 2.8 | 7.0 | 7.0 | B | B | 5500 B | B |
| Example 19 | 85 | 15 | 3.0 | 3.0 | 7.0 | 7.0 | B | B | 8300 B | B |

Results

The biaxially-oriented nylon film of each of Examples 12 to 19 contains Ny6 and MXD6 in which the mass ratio of Ny6 was from 1.5 to 6 and the draw ratio when the nylon film were biaxially oriented was 2.8 or more in both the MD direction and the TD direction. Accordingly, all the biaxially-oriented nylon films exhibited an excellent easy-tearability with the tearing strength of 7.0 kg/cm or less and also exhibited favorable or extremely favorable linear cuttability. Since the impact strength of all the biaxially-oriented nylon films was 5500 kg·cm/cm or more, all the biaxially-oriented nylon films had a high impact strength usable for a pillow package for food packaging.

INDUSTRIAL APPLICABILITY

The invention is applicable to a casing material for pillow packaging for packaging foods, medicines, industrial materials, cosmetics and the like, and a pillow package.

EXPLANATION OF CODES

| | |
|---|---|
| 1 | casing material for pillow packaging |
| 2 | pillow package |
| 11 | biaxially-oriented nylon film |
| 12 | adhesion layer |
| 13 | protection layer |
| 21 | adhesion portion |
| 21A | backlining portion |
| 22 | notch |

## Claims

**1.** A casing material for pillow package, comprising:

a biaxially-oriented nylon film; and
an adhesion layer that is laminated on the biaxially-oriented nylon film and comprises a cast polypropylene resin as a main component, wherein
a protection layer is laminated on the biaxially-oriented nylon film at a side opposite to the adhesion layer, and the protection layer is formed of at least one of a polyvinylidene chloride resin, an acrylic resin, a urethane resin, a polyethylene terephthalate resin and a nitrocellulose amide resin by solvent coating.

**2.** The casing material for pillow package according to claim 1, wherein
the biaxially-oriented nylon film comprises Nylon 6 and metaxylylene adipamide at a mass ratio of Nylon 6 to metaxylylene adipamide ((Nylon 6)/(metaxylylene adipamide)) being from 1.5 to 6, and
the biaxially-oriented nylon film is formed by being oriented at a draw ratio of 2.8 or more in both an MD direction (a movement direction of the film) and a TD direction (a width direction of the film).

**3.** The casing material for pillow package according to claim 1 or 2, wherein the protection layer has a thickness of 0.5 $\mu$m to 5 $\mu$m.

**4.** A pillow package formed of the casing material for pillow package according to any one of claims 1 to 3, comprising:

an adhesion portion formed by overlapping the adhesion layer to itself; and
a containing space inside the pillow package, wherein
the protection layer is provided at a side of the biaxially-oriented nylon film opposite to the containing space.

**5.** The pillow package according to claim 4, wherein a notch is formed on the adhesion portion.

FIG. 1

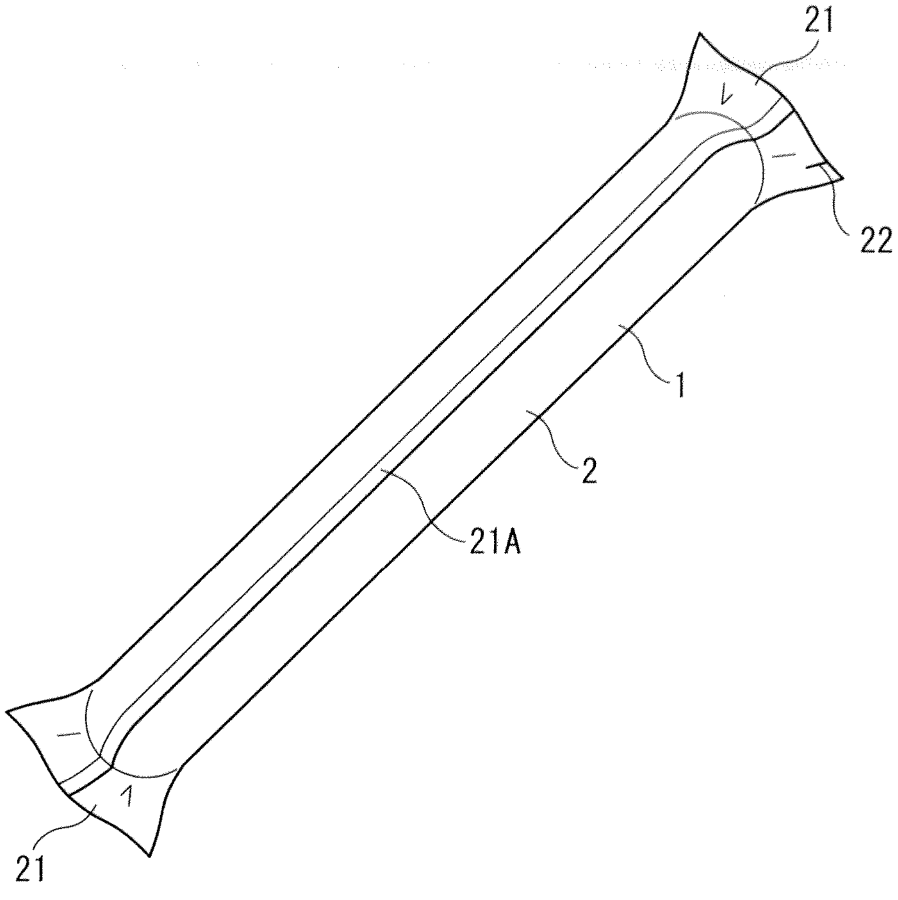

FIG.2

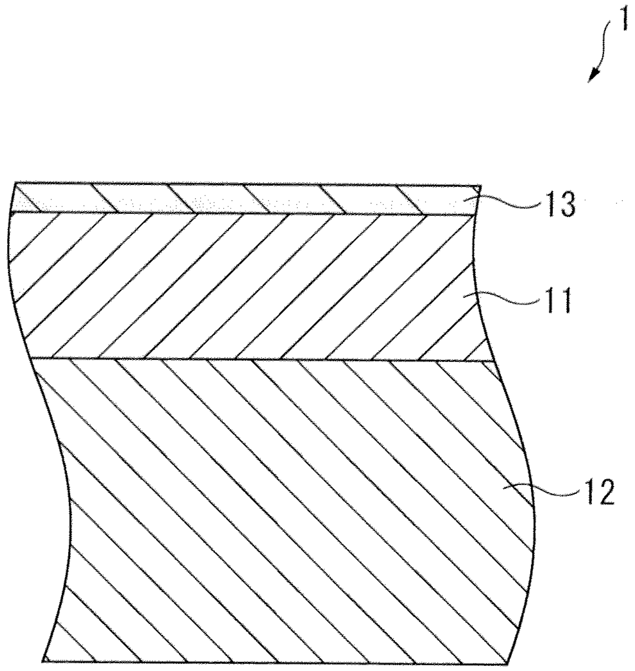

FIG.3

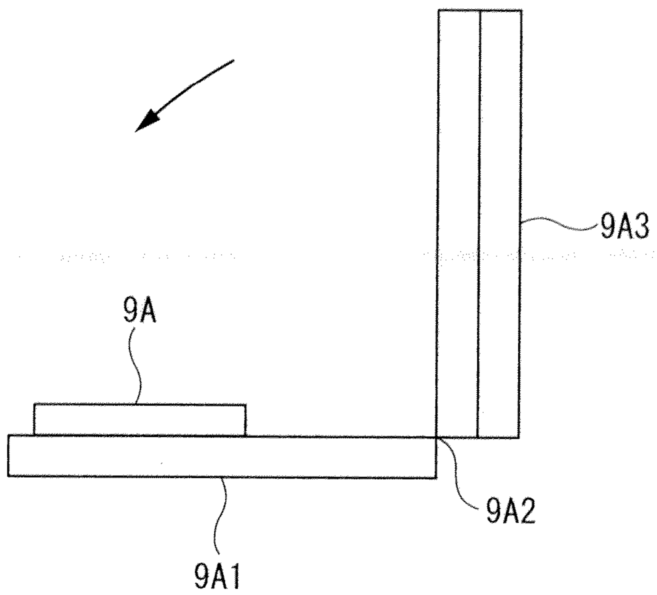


FIG.4

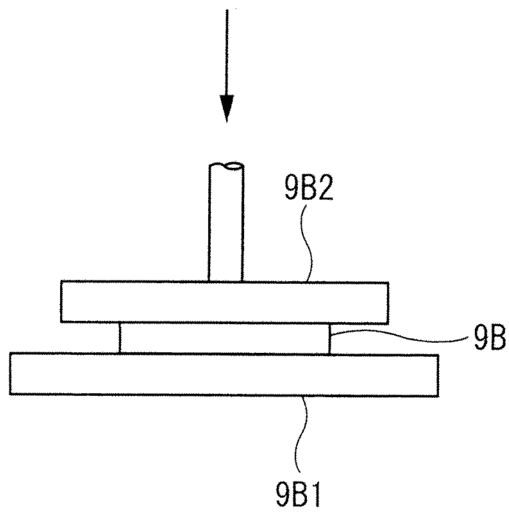

FIG.5

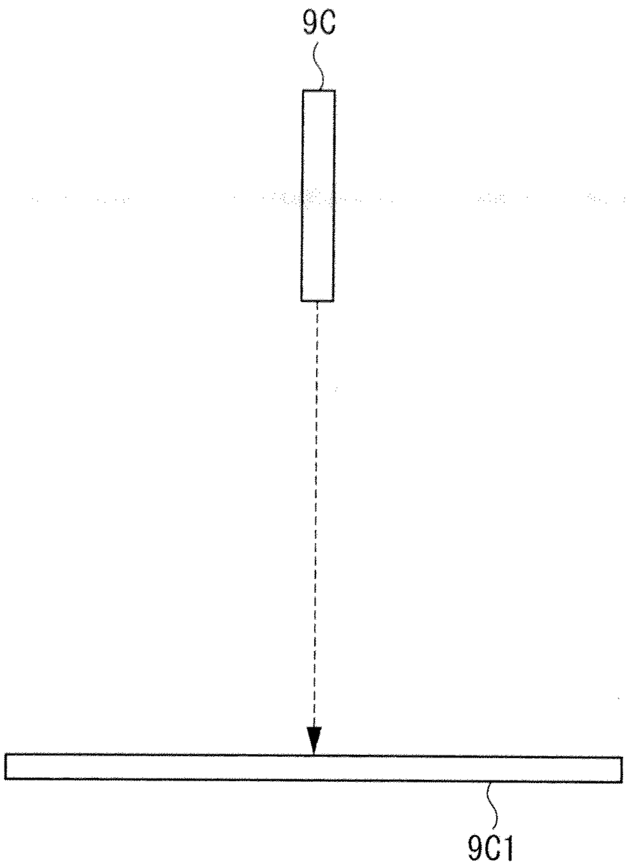

FIG.6

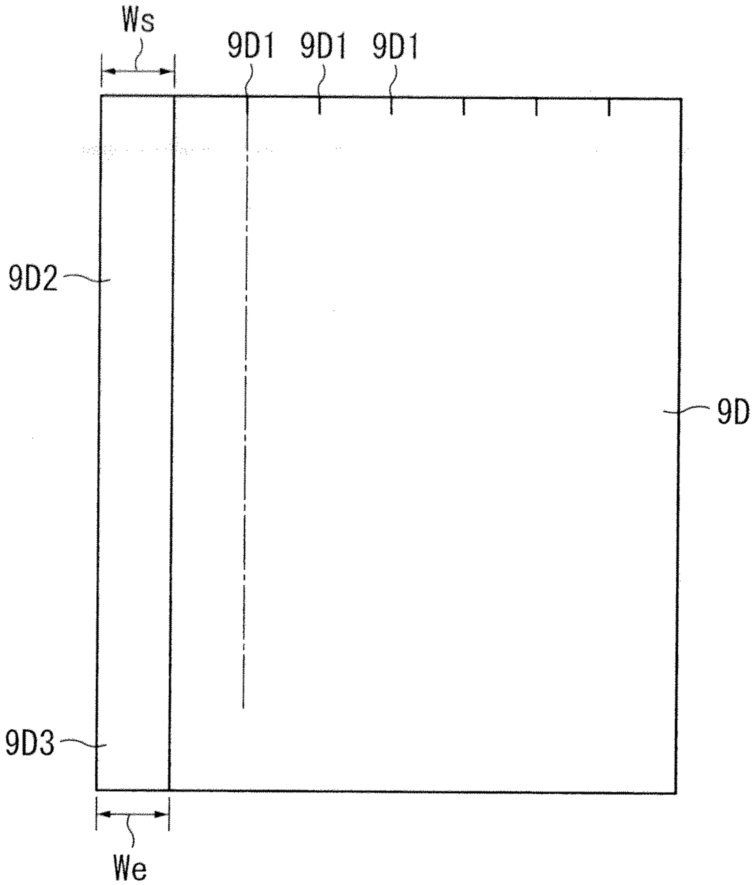

**INTERNATIONAL SEARCH REPORT**

International application No. PCT/JP2011/051743

A. CLASSIFICATION OF SUBJECT MATTER
*B65D65/40*(2006.01)i, *A22C13/00*(2006.01)i, *B65D33/00*(2006.01)i, *B65D33/22*(2006.01)i, *B65D85/50*(2006.01)i

According to International Patent Classification (IPC) or to both national classification and IPC

B. FIELDS SEARCHED

Minimum documentation searched (classification system followed by classification symbols)
B65D65/40, A22C13/00, B65D33/00, B65D33/22, B65D85/50

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2011 |
| Kokai Jitsuyo Shinan Koho | 1971-2011 | Toroku Jitsuyo Shinan Koho | 1994-2011 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| Y | JP 2000-203680 A (Asahi Chemical Polyflex Ltd.), 25 July 2000 (25.07.2000), entire text; all drawings (Family: none) | 1-5 |
| Y | JP 04-082737 A (Sekisui Chemical Co., Ltd.), 16 March 1992 (16.03.1992), entire text; all drawings (Family: none) | 1-5 |

☐ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| | |
|---|---|
| Date of the actual completion of the international search<br>13 April, 2011 (13.04.11) | Date of mailing of the international search report<br>26 April, 2011 (26.04.11) |
| Name and mailing address of the ISA/<br>Japanese Patent Office<br>Facsimile No. | Authorized officer<br><br>Telephone No. |

Form PCT/ISA/210 (second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 5200958 A
- JP 2001030445 A
- JP 2000203680 A